Europäisches Patentamt

European Patent Office

Office européen des brevets

(11) Veröffentlichungsnummer: **0 078 928**
**A2**

(12) **EUROPÄISCHE PATENTANMELDUNG**

(21) Anmeldenummer: 82109361.4

(22) Anmeldetag: 09.10.82

(51) Int. Cl.³: **F 25 B 49/00**

(30) Priorität: 10.11.81 CH 7232/81

(43) Veröffentlichungstag der Anmeldung:
18.05.83 Patentblatt 83/20

(84) Benannte Vertragsstaaten:
AT BE CH DE FR GB IT LI LU NL SE

(71) Anmelder: Feraton Anstalt
Bürotel
FL-9494 Schaan(LI)

(72) Erfinder: Jovy, Herbert, Dr.
Max Rüttger Strasse 22
Irschenhausen(DE)

(72) Erfinder: Stahl, Jürgen
Jucho Strasse 3
Frankfurt/Main(DE)

(72) Erfinder: Schuster, Wilhelm
Georg-Speyer Strasse 64
Frankfurt/Main(DE)

(74) Vertreter: Blum, Rudolf Emil Ernst et al,
c/o E. BLUM & CO. Vorderberg 11
CH-8044 Zürich(CH)

(54) Verfahren zur Regelung der umlaufenden Kältemittel in einem Kältemittelkreis und Vorrichtung zur Durchführung des Verfahrens.

(57) In der aus Verdampfer, Kompressor, Kondensator und zwischen Kondensator und Verdampfer angeordneten Drosselorgan bestehenden Vorrichtung wird die Temperatur des noch flüssigen Kältemittels im Endbereich der Verdampfungszone (Z1) und die Temperatur des gasförmigen Kältemittels im Bereich der Ueberhitzungszone (Z2) gemessen und die Temperaturdifferenz mit einem vorgegebenen Sollwert verglichen. Bei Abweichung der ermittelten Temperaturdifferenz vom Sollwert wird das Drosselorgan (2) geöffnet oder geschlossen, um das Gleichgewicht herzustellen. Die Temperaturmessungen erfolgen durch Thermofühler (3,4), die mit einem Differenzbildner (5) verbunden sind, dem ein mit einem Sollwertgeber (7) ausgerüsteter Vergleicher (6) nachgeschaltet ist. Dieser Vergleicher ist über ein Stellungsbefehlsgerät (8) an einem das Drosselorgan (2) betätigenden Motor (9) angeschlossen. Damit kann das Drosselorgan (2) für unterschiedliche Kältemittel, bzw. Kältemittelgemische und für unterschiedliche Wärmequellentemperaturen, bzw. Kühlraumtemperaturen verwendet werden.

./...

EP 0 078 928 A2

-1-

Verfahren zur Regelung der umlaufenden
Kältemittel in einem Kältemittelkreis
und Vorrichtung zur Durchführung des
Verfahrens

Die Erfindung betrifft ein Verfahren zur Regelung der umlaufenden Kältemittelmenge in einem Kältemittelkreis von Kühlanlagen oder Wärmepumpen mit Hilfe eines Ventils.

Im Kältemittelkreis von Kühlanlagen und Wärmepumpen durchströmt ein Kältemittel einen an eine Wärmequelle angeschlossenen Verdampfer, in dem es bei einem gegebenem Druck und einer gegebenen, relativ niedrigen Temperatur verdampft und hierfür Wärme aufnimmt. Der Kältemitteldampf wird von einem Kompressor angesaugt, komprimiert und dabei auf eine höhere Temperatur gebracht. Der komprimierte, erwärmte Kältemitteldampf strömt in einen Kondensator, wo er seine Wärme an ein Nutzungsmedium abgibt und sich verflüssigt. In einem als Drosselorgan ausgelegten Ventil wird das Kältemittel auf den niedrigen Druck entspannt, unter dem es wieder verdampfen, den Kreislauf also erneut beginnen kann.

Dieser aus Verdampfer, Kompressor, Kondensator und Ventil bestehende Kältemittelkreislauf ist ausschlaggebend für die Leistungsfähigkeit, Zuverlässigkeit und Nutzungsdauer einer Kühlanlage bzw. Wärmepumpe.

AMS/sp
1.10.1982

EU 1129

Ein wesentliches Bauteil dieses Kältemittelkreises ist das zwischen Kondensator und Verdampfer angeordnete Ventil, das die Kältemittelmenge steuert. Es werden hierzu herkömmliche Expansionsventile bzw. Einspritzventile verwendet, die durch Federdruck in Schliessstellung gehalten und durch Bewegung einer Membrane geöffnet werden. Druckseitig ist die Membrane mit einem gas- oder flüssigkeitsgefüllten Fühler verbunden, der am Verdampferausgang dem gasführenden Rohr anliegt und mit einer Schelle befestigt ist. Saugseitig ist die Membrane mit dem im Verdampfer herrschenden Druck beaufschlagt. Temperaturänderungen am Verdampferausgang und Druckänderungen im Verdampfungsraum führen zu Membranbewegungen und damit zum Schliessen oder Oeffnen des Einspritzventils. Bei reinen Kältemitteln ist der Verdampfungsdruck ein Mass für die Verdampfungstemperatur und durch entsprechende Auslegung von Membrane und Spiralfeder dem Ventil eingeprägt. Fällt der Verdampfungsdruck, weil der Kompressor mehr Kältemittel absaugt als eingespritzt wird, so öffnet das Ventil. Dieses öffnet auch dann, wenn die Temperatur am Sauggas-Rohr ansteigt. Durch Wahl des Füllmediums im Fühler und durch Einstellen der Federvorspannung ist das Ventil auf ein ganz bestimmtes Kältemittel, einen bestimmten Verdampfungstemperaturbereich und auf eine bestimmte Ueberhitzung des Saugdampfes eingestellt. Der dadurch bedingte zulässige Arbeitsbereich ist jeweils am Ventil angegeben und dieses kann demzufolge nur im vorgegebenen Bereich, d.h. mit ganz bestimmten Kältemitteln und Temperaturbereichen arbeiten. Bei Verwendung anderer Kältemittel, anderen Verdampfungstemperaturen und anderen Ueberhitzungen ist ein Ventilaustausch erforderlich. Dies bedingt aber die Bereitstellung verschiedenartig ausgelegter Ventile, wodurch die Wirtschaftlichkeit und der Einsatzbereich des Kältemittelkreises wesentlich beeinträchtigt ist.

Hier will die Erfindung Abhilfe schaffen. Die Erfindung, wie sie in den Ansprüchen gekennzeichnet ist, löst die Aufgabe, ein Verfahren zur Regelung der umlaufenden Kältemittelmenge im Kältemittelkreis von Kühlanlagen oder Wärmepumpen mit Hilfe eines Ventils zu schaffen, und die Ventilsteuerung entsprechend dem Verfahren so auszulegen, dass die Temperatur des Kältemittels lediglich im Endbereich der Verdampfungszone und die Temperatur des Kältemittels lediglich im Bereich der Ueberhitzungszone gemessen werden und bei Abweichung von einem Sollwert das Ventil betätigt wird.

Die durch die Erfindung erreichten Vorteile sind im wesentlichen darin zu sehen, dass ein Ventil ohne Umrüstung für jedes Kältemittel und auch für Kältemittelmischungen verwendet werden kann. Bei Veränderungen der Wärmequellentemperatur, bzw. der Kühlraumtemperatur bei Kälteanlagen und der damit verbundenen Aenderungen der Verdampfungstemperatur kann das Ventil sofort optimal nachregeln und dies ohne Begrenzung auf einen Verdampfungstemperaturbereich. Der Kältemittelkreis kann auch mit sehr hohen Verdampfungstemperaturen, beispielsweise Nutzung von Abwärme, ohne Umrüstung gefahren werden. Durch das Ventil kann die vorgegebene Ueberhitzungstemperatur bei allen Betriebszuständen konstant gehalten und somit der Dampf optimal genutzt werden. Das Ventil kann den Kompressor zuverlässig vor Flüssigkeitsschlägen schützen. Es kann beispielsweise möglich sein, den Kältemittelkreis aus einem Brunnen mit 10° C zu fahren und ohne weiteres und ohne Umrüstung auf höhere Temperaturen überzugehen, wenn zwischenzeitlich aus einem Industriebetrieb eine höhere Temperatur, z.B. 40° C, anfällt. Dabei kann einfach der als Wärmequellenanlage dienende Brunnen abgeschaltet, und der Kältemittelkreis ohne Umrüstung oder sonstige Vorkehrungen an die neue Wärmequellenanlage angeschlossen werden. Die Vorrichtung kann sich dabei automatisch auf den neuen Differenzwert einstellen und einwandfrei und zuverlässig weiter arbeiten.

Auf diese Weise kann das Verfahren und die Vorrichtung eine trägheitslose und von der Umgebungstemperatur unbeeinflusste Regelung der Kältemittelmenge für Kühlanlagen und Wärmepumpen in Abhängigkeit von der Kältemitteldampfüberhitzung ermöglichen.

Im folgenden wird die Erfindung anhand von einer Ausführung näher erläutert.

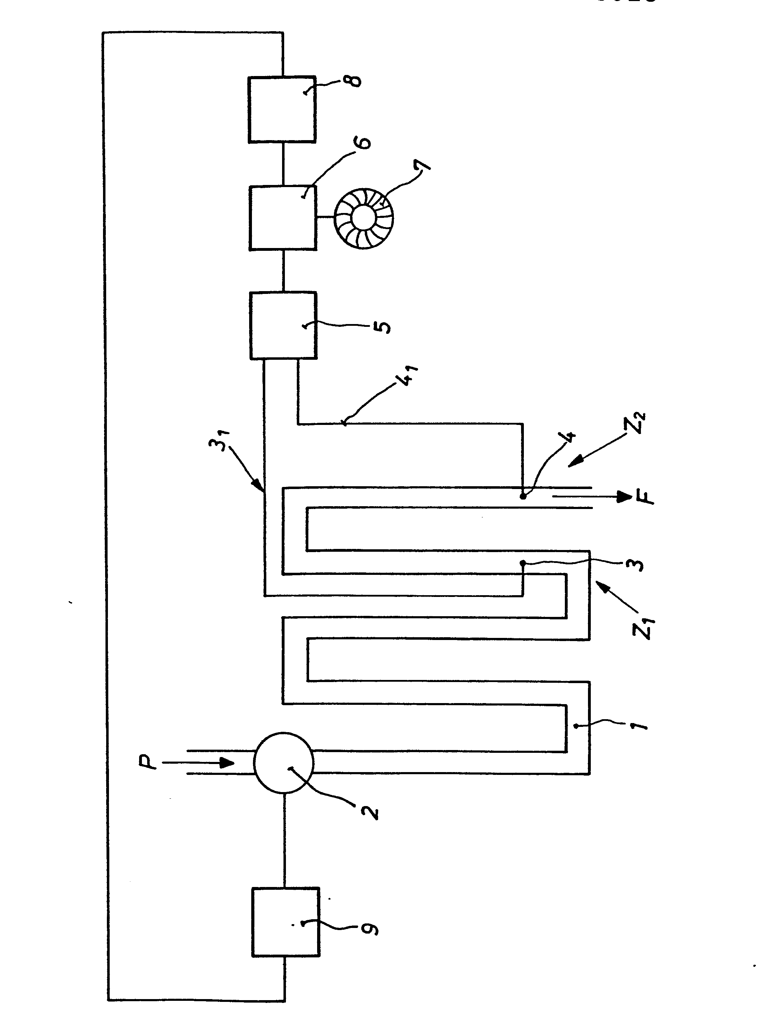

Die einzige Figur zeigt schematisch eine Vorrichtung zum Steuern eines Ventils in einem Kältemittelkreis. Der Kältemittelkreis besteht in an sich bekannter Weise aus dem Verdampfer, Kompressor, Kondensator und einem zwischen Kondensator und Verdampfer angeordneten Ventil. Kompressor und Kondensator des Kältemittelkreises sind in der Zeichnung nicht dargestellt. Der Pfeil P gibt aber die Strömungsrichtung des aus dem Kondensator kommenden in den Verdampfer fliessenden Kältemittels und der Pfeil F gibt die Strömungsrichtung des aus dem Verdampfer zum Kompressor abfliessenden Kältemittels an.

Aus dem Kondensator strömt flüssiges Kältemittel in das am Eingang des Verdampfers 1 angeordnete Ventil 2, durch das die eingespritzte Kältemittelmenge geregelt wird. Diese gelangt aus dem Ventil 2 in die erste, die Verdampfungszone $Z_1$ des Verdampfers 1. In dieser Zone $Z1$, mit dem noch flüssigen siedenden Kältemittel ist ein erster Thermofühler 3 so angeordnet, dass er vom Kältemittel umspült wird. Dieser Thermofühler 3 führt über die Leitung $3_1$ zu einem Differenzbildner 5. In der folgenden, der Ueberhitzungszone $Z_2$ am Ausgang des Verdampfers 1 ist ein zweiter Thermofühler 4 so angeordnet, dass er vom Sauggas umspült wird. Dieser Thermofühler 4 führt über eine Leitung $4_1$ zum Differenzbildner 5. Der erste Thermofühler 3 ermittelt die Verdampfungstemperatur und der zweite Thermofühler 4 ermittelt die Sauggastemperatur des Kältemittels. Diesen Temperaturen entsprechende Signale werden dem Differenzbildner 5 mitgeteilt, der seinerseits ein der Temperaturdifferenz entsprechendes Signal einem nachgeschalteten Vergleicher 6 weitergibt. Dem Vergleicher 6 ist ein auf einen Sollwert eingestellten Sollwertgeber 7 zugeordnet, so dass das Signal der Temperaturdifferenz mit dem Signal des Sollwertgebers 7 verglichen werden kann. Der Vergleicher 6 ist ferner mit einem Stellungsbefehlsgerät 8 verbunden. Sind die Signale der Temperaturdifferenz und des Sollwertes verschieden, erhält das Stellungsbefehlsgerät 8 vom Vergleicher 6 einen Befehl zur Aenderung der Stellung des Ventils 2. Dieser Befehl löst ein Signal aus, das zu einem Stellmotor 9 gesendet wird, der zur Steuerung des Ventils 2 mit diesem verbunden ist. Entsprechend dem erhaltenen Befehl ändert der Stellmotor 9 die Ventilstellung, um den Zulauf oder den Ablauf der Menge des Kältemittels zu regeln und dabei die Temperaturdifferenz im Verdampfer dem Sollwert anzugleichen. Es ist deutlich, dass auf diese Weise weder die Art des Kältemittels noch Veränderungen der Wärmequellentemperatur bei der Auslegung des Ventils eine Rolle spielen und das Verfahren ist lediglich auf den Sollwert des Systems abgestellt, das auf diese Weise einwandfrei arbeitet und sich automatisch auf die optimale Leistung der Kälteanlage oder der Wärmepumpe einstellt.

Der Differenzbildner 5, der Vergleicher 6, der Sollwertgeber 7 und das Stellungsbefehlsgerät 8 sind zweckmässig elektronische Bausteine und als solche auf einer Leiterplatte vereint.

## Patentansprüche

1. Verfahren zur Regelung der umlaufenden Kältemittelmenge in einem Kältemittelkreis von Kühlanlagen oder Wärmepumpen mit Hilfe eines Ventils, dadurch gekennzeichnet, dass die Temperatur des Kältemittels im Endbereich der Verdampfungszone und die Temperatur des Kältemittels im Bereich der Ueberhitzungszone gemessen und die dabei ermittelte Temperaturdifferenz zwischen dem noch flüssigen und dem gasförmigen Kältemittel mit einem Sollwert verglichen und bei Abweichung vom Sollwert das Ventil betätigt wird.

2. Verfahren nach Anspruch 1, dadurch gekennzeichnet, dass die Messung der Temperatur des Kältemittels im Bereich der Ueberhitzungszone am Verdampferausgang stattfindet.

3. Vorrichtung zur Ventilsteuerung in einem Kältemittelkreis von Kühlanlagen oder Wärmepumpen, mit Verdampfer, Kompressor, Kondensator und einem zwischen Kondensator und Verdampfer angeordneten Ventil, zur Durchführung des Verfahrens nach Anspruch 1, dadurch gekennzeichnet, dass ein Thermofühler (3) in der Verdampfungszone und ein Thermofühler (4) in der Ueberhitzungszone des Verdampfers (1) angeordnet ist, beide Thermofühler (3 und 4) getrennt an einem Differenzbildner (5) angeschlossen sind, dem ein mit einem Sollwertgeber (7) ausgerüsteter Vergleicher (6) nachgeschaltet ist, der seinerseits über ein Stellungsbefehlsgerät (8) mit einem dem Ventil (2) zugeordneten Motor (9) verbunden ist.